# EUROPÄISCHE PATENTSCHRIFT

(11) **EP 3 661 364 B1**
(45) Veröffentlichungstag und Bekanntmachung des Hinweises auf die Patenterteilung: **13.07.2022**
(21) Anmeldenummer: 18750158.0
(22) Anmeldetag: 01.08.2018
(51) Int. Cl.: A01N 33/02, A01N 61/00, A01P 1/00, C02F 1/50, C02F 1/28, C02F 1/00, B01J 20/26, B01D 27/00, B01D 39/04, B01J 20/30, B01J 20/28

(54) **ENTFERNUNG VON BAKTERIEN AUS TRINKWASSER ÜBER FILTRATION**
REMOVAL OF BACTERIA FROM DRINKING WATER BY FILTRATION
ELIMINATION DE BACTÉRIES DE L'EAU POTABLE PAR FILTRATION

(30) Priorität: 01.08.2017 DE 102017007273
(43) Veröffentlichungstag der Anmeldung: 10.06.2020
(73) Patentinhaber: InstrAction GmbH, 69124 Heidelberg (DE)
(72) Erfinder: WELTER, Martin, 69151 Neckargemünd (DE); MEYER, Christian, 68723 Schwetzingen (DE); LUNGFIEL, Kristian, 65195 Wiesbaden (DE)
(74) Vertreter: Scheele Wetzel Patentanwälte
(86) Internationale Anmeldenummer: PCT/EP2018/070866
(87) Internationale Veröffentlichungsnummer: WO 2019/025488

(56) Entgegenhaltungen:
- WO-A1-01/07090
- WO-A1-2016/030021
- WO-A1-2017/089523
- US-A- 5 314 968
- US-A1- 2004 251 190
- US-A1- 2015 344 520

## Beschreibung

Die vorliegende Erfindung betrifft ein Verfahren zur Herstellung von bioziden, porösen Partikeln aus einem vernetzten Polymer, und die porösen Partikel selbst, die nach dem erfindungsgemäßen Verfahren herstellbar sind. Weiterhin betrifft die vorliegende Erfindung auch poröse Partikel aus einem Amino-Gruppen enthaltenden Polymer (Polyamin) mit einem relativ geringen Quellfaktor. Die erfindungsgemäßen porösen Partikel werden zur Entfernung von biologischen Verunreinigungen aus Wasser sowie zur Bindung von Metall-haltigen Ionen aus Lösungen verwendet. Die vorliegende Erfindung betrifft auch eine Filterkartusche, die erfindungsgemäße poröse Partikeln aus einem vernetzten Polymer enthält.

Die biologische Verunreinigung von Trinkwasser ist ein bekanntes und besonders in wärmeren Regionen der Erde kritisches Problem. Auch nach Naturkatastrophen sind Brunnen mit Bakterien und Keimen verunreinigt. Häufig wird der Verkeimung mit dem Zusatz von Hypochlorid begegnet, was die Wasserqualität deutlich mindert. Alternativen sind Ozonistaion, UV-Bestrahlung, Membranfiltration und dergleichen. Diese Verfahren sind teilweise sehr energieaufwändig (hoher Druck) und teuer, fordern den Einsatz von Chemikalien oder mindern die Wasserqualität in anderer Hinsicht, beispielweise auf Grund erheblichen Chlorgeschmacks. Das Wasser muss gegebenenfalls abgekocht bzw. über Aktivkohle filtriert werden, um das Chlor zu entfernen. Wasserreinigungssysteme nach dem Stand der Technik, wie beispielsweise Enthärtungsanlagen, Wasserspender mit und ohne Reinigungsmodule stehen immer wieder unter dem Verdacht der Verkeimung und müssen sorgfältig gereinigt werden. Schwimmbäder, die auf Chlorierung des Wassers verzichten und biologische Reinigungsstufen verwenden, kämpfen in der wärmeren Jahreszeit häufig mit Bakterienbelastung. In Haushalten mit Warmwasserspeicher muss dieser immer über einer bestimmten hohen Temperatur gehalten werden, um einer Verkeimung mit Listerien zu entgegnen. Auch Anlagen mit geschlossenen Wasserkreisläufen benötigen ebenfalls Entkeimungsverfahren zum Erhalt der Wasserqualität, beispielsweise in industriellen (Kühl-)Wasserkreisläufen.

Auch die Entfernung von unerwünschten Metall-Ionen, insbesondere Schwermetall-Ionen aus Trinkwasser ist in diesem Zusammenhang ebenfalls von Bedeutung.

Die WO 2017/089523 und WO 2016/030021 offenbaren ein Sorbens zur Entfernung von Metall-Ionen und Schwermetall-Ionen aus Wasser sowie ein Herstellungsverfahren für ein derartiges Sorbens. Allerdings weisen die in diesen Druckschriften offenbarten Materialen nur eine geringe biozide Wirkung auf. Dies zeigt sich in der Bildung von Biofilmen auf der Oberfläche dieser Materialen was einerseits dazu führt, dass die Metall-Bindungskapazität sinkt und anderseits nur bedingt für die Entfernung von biologischen Verunreinigungen geeignet ist.

Es war deshalb die Aufgabe der Erfindung ein verbessertes Sorbens bereitzustellen, das diese Nachteile nicht aufweist.

Die Aufgabe wurde gelöst durch ein Verfahren zur Herstellung von bioziden, porösen Partikeln aus einem vernetzten Polyamin, das die folgenden Schritte umfasst:
(a) Bereitstellen einer wässrigen Suspension enthaltend ein Polyamin, einen Vernetzer und ein poröses anorganisches Trägermaterial in Partikelform in einem Mischer bei einer Temperatur kleiner oder gleich 10 °C zum Beschichten des anorganischen Trägermaterials mit dem Polyamin;
(b) Vernetzen des Polyamins in den Poren des anorganischen Trägermaterials und gleichzeitiges Entfernen von Wasser;
(c) Herauslösen des anorganischen Trägermaterials unter Erhalt der bioziden, porösen Partikel aus einem vernetzten Polyamin;
   worin das poröse anorganische Trägermaterial ein Material ist, das sich in wässrig-alkalischen Bedingungen bei pH > 10 auflösen lässt.

Bevorzugt in dem erfindungsgemäßen Verfahren ist, dass der Schritt (a) und (b) wenigstens einmal wiederholt wird.

Überraschenderweise wurde gefunden, dass durch dieses Verfahren einerseits eine weniger aufwändige Herstellungsmethode für das Sorbens im Vergleich zum Stand der Technik bereitgestellt werden kann. Darüber hinaus neigt das so hergestellte Sorbens nicht zur Bildung von Biofilmen und zeigt eine sehr hohe biozide Wirkung gegenüber Bakterien, Keimen, Hefen, Pilzen und Viren.

Die porösen Partikel aus einem vernetzten Polymer können erfindungsgemäß auch als Sorbens im zuvor genannten Sinn bezeichnet werden. Weiterhin werden die Begriffe Polyamin und Polymer hier synonym verwendet.

Die Beschichtung und das Vernetzen erfolgt erfindungsgemäß vorzugsweise in einem Rührreaktor, beispielsweise einem Lödige-Mischer. Dies hat den Vorteil gegenüber einer Vernetzung imSuspension, dass die Vernetzung einfach in den Poren des bereits teilvernetzten Polymers und in unkritischem Wasser durchgeführt werden kann. Dabei wird die Temperatur im Schritt (b) im Gegensatz zur Beschichtung aus Schritt (a) erhöht. Es kommt hier nahezu vorwiegend zu einer Vernetzung in den Poren des porösen Trägermaterials und gleichzeitig wird während des Vernetzens das Lösungsmittel Wasser entfernt, so dass der Schritt (a) und folglich Schritt (b) in derselben Apparatur wiederholt werden kann. Die Schritte (a) und (b) können so lange wiederholt werden, bis der gewünschte Beschichtungsgrad und Dichte an Aminogruppen erreicht wird. Bevorzugt wird mindestens zweimal beschichtet und vernetzt, es kann jedoch auch dreimal, viermal oder mehrmals beschichtet und vernetzt werden. Am meisten bevorzugt ist zweimal. Bevorzugt wird am Ende der Beschichtung und Vernetzung, also vor Schritt (c) die Temperatur für etwa 1 Stunde auf etwa 60 °C erhöht und gehalten.

Insbesondere bevorzugt ist, dass das Sorbens vor Schritt (c) nachvernetzt wird. Vorzugsweise erfolgt dies mit Epichlorhydrin und Diaminoethylen bei einer Temperatur von 80-90 °C, bevorzugt 85 °C.

Gemäß einer weiteren Ausführungsform der Erfindung wird das Polyamin im nicht-entsalzten Zustand eingesetzt. Bei der Hydrolyse des durch Polymerisation zugänglichen Polyvinylformamids mit Natronlauge und der anschließenden Abstumpfung mit Salzsäure entstehen Kochsalz und Natriumformiat. Die Entsalzung der Polymerlösung erfolgt durch Membranfiltration, bei der das Polymer zurückgehalten wird, während die Salze durch die Membranschicht dringt. Die Membranfiltration wird solange fortgesetzt, bis der Salzgehalt gemäß des Veraschungsrückstandes weniger als 1% der Einwaage (1% des Gehalts an Polymer) entspricht.

Vorher spricht von nicht- oder teil-entsalztem Polymer, danach von einem entsalzten Polymer.

Dies erspart einen weiteren Reinigungsschritt. Dadurch kann zwar nach Schritt a) ein zusätzlicher Waschschritt erforderlich sein, jedoch lassen sich durch den Einsatz eines nicht-entsalzten Polymers die Kosten für die Herstellung des Beschichtungspolymers (z.B. PVA) drastisch senken. Das Verfahren wird dadurch insgesamt wirtschaftlicher.

Durch die gleichzeitige Zugabe eines Vernetzers zu einer Suspension eines organischen Polymers bei niedrigen Temperaturen von kleiner oder gleich 10 °C bei der Beschichtung (Schritt (a)) bildet sich direkt in den Poren des Trägers langsam ein Hydrogel und das Polymer ist direkt immobilisiert. Bei Verwendung eines nicht-entsalzten Polymers können die Salze, die bei der Hydrolyse entstehen, einfach mit Wasser ausgewaschen werden. Außerdem kann die anschließende Vernetzung in Folge der Vorvernetzung während der Beschichtung, beispielsweise oder bevorzugt mit Epichlorhydrin und Diaminoethylen, in wässriger Suspension durchgeführt werden und muss nicht im Wirbelbett durchgeführt werden, wie dies im Stand der Technik bisher der Fall war. Dies führt zu einer erheblichen Vereinfachung des Verfahrens. Die Durchführung der Vernetzung in wässriger Suspension hat bei Verwendung von Epichlorhydrin zudem den Vorteil, dass nicht abreagiertes Epichlorhydrin mit der Natronlauge einfach hydrolysiert und damit unschädlich gemacht bzw. in harmlose Substanzen (Glycerin) überführt wird.

Ein weiterer Vorteil ist, dass die Zugänglichkeit und die Kapazität des Hydrogels für Metallionen durch das Herauslösen des Kieselgelträgers in Schritt c) weiter erhöht wird.

Das poröse anorganische Trägermaterial in Partikelform ist vorzugsweise ein mesoporöses oder makroporöses Trägermaterial. Die mittlere Porengröße des porösen Trägermaterials liegt vorzugsweise im Bereich von 6 nm bis 400 nm, stärker bevorzugt im Bereich von 8 bis 300 nm und am stärksten bevorzugt im Bereich von 10 bis 150 nm vor. Für industrielle Anwendungen ist zudem ein Partikelgrößenbereich von 100 bis 3000 nm bevorzugt. Weiterhin ist es bevorzugt, dass das poröse Trägermaterial ein Porenvolumen im Bereich von 30 Vol.-% bis 90 Vol.-%, stärker bevorzugt von 40 bis 80 Vol.-% und am stärksten bevorzugt von 60 bis 70 Vol.-% aufweist, jeweils bezogen auf das Gesamtvolumen des porösen Trägermaterials. Die mittlere Porengröße und das Porenvolumen des porösen Trägermaterials können durch das Porenfüllverfahren mit Quecksilber gemäß DIN 66133 bestimmt werden.

Das poröse anorganische Material ist erfindungsgemäss eines, das sich in wässrig-alkalischen Bedingungen bei pH größer 10, stärker bevorzugt pH größer 11 und am stärksten bevorzugt pH größer 12 auflösen lässt. In anderen Worten findet der Schritt (c) des Herauslösens des anorganischen Trägermaterials unter Erhalt der porösen Partikel aus einem vernetzen Polymer in den genannten wässrig-alkalischen Bedingungen statt. Das poröse anorganische Material ist vorzugsweise eines auf Basis von Siliziumdioxid bzw. Kieselgel, bzw. besteht daraus.

Das poröse anorganische Trägermaterial ist vorzugsweise ein partikuläres Material mit einer durchschnittlichen Partikelgröße im Bereich von 5 µm bis 2000 µm, stärker bevorzugt im Bereich von 10 µm bis 1000 µm. Die Form der Partikel kann hierbei kugelförmig (sphärisch), stäbchenförmig, linsenförmig, Donut-förmig, elliptisch oder auch irregulär sein, wobei sphärische Partikel bevorzugt sind.

Der in Schritt (a) eingesetzte Anteil an Polyamin liegt in einem Bereich von 5 Gew.-% bis 50 Gew.-%, stärker bevorzugt 10 bis 45 Gew.-% und noch stärker bevorzugt 20 bis 40 Gew.-%, jeweils bezogen auf das Gewicht des porösen anorganischen Trägermaterials ohne Polyamin.

Das Aufbringen des Polyamins auf das poröse anorganische Trägermaterial in Partikelform in Schritt (a) des erfindungsgemäßen Verfahrens kann durch verschiedene Verfahren, wie beispielsweise Tränkungsverfahren oder durch die Porenfüllmethode erfolgen, wobei die Porenfüllmethode bevorzugt ist. Die Porenfüllmethode bringt gegenüber herkömmlichen Tränkungsverfahren den Vorteil mit sich, dass insgesamt eine größere Menge an gelöstem Polymer in einem Schritt auf das poröse anorganische Trägermaterial aufgebracht werden kann, wodurch die Bindungskapazität erhöht und das herkömmliche Verfahren vereinfacht wird.

Bei allen denkbaren Verfahren in Schritt (a) muss das Polymer in einem Lösungsmittel gelöst vorliegen. Als Lösungsmittel für das in Schritt (a) aufgebrachte Polymer wird vorzugsweise eines eingesetzt, in dem das Polymer löslich ist. Die Konzentration des Polymers für das Aufbringen auf das poröse anorganische Trägermaterial liegt vorzugsweise im Bereich von 5 g/L bis 200 g/L, stärker bevorzugt im Bereich von 10 g/L bis 180 g/L, am stärksten bevorzugt im Bereich von 30 bis 160 g/L.

Unter der Porenfüllmethode wird allgemein ein spezielles Beschichtungsverfahren verstanden, bei dem eine Lösung, die das aufzubringende Polymer enthält, in der Menge auf das poröse anorganische Trägermaterial aufgebracht wird, die dem Gesamtvolumen der Poren des porösen Trägermaterials entspricht. Das Gesamtvolumen der Poren [V] des porösen anorganischen Trägermaterials kann durch die Lösungsmittelaufnahmekapazität (WAK) des porösen anorganischen Trägermaterials bestimmt werden. Ebenso kann auch das relative Porenvolumen [Vol.-%] bestimmt werden. Hierbei handelt es sich jeweils um das Volumen der frei zugänglichen Poren des Trägermaterials, da nur dieses durch die Lösungsmittelaufnahmekapazität bestimmt werden kann. Die Lösungsmittelaufnahmekapazität gibt an, welches Volumen eines Lösungsmittels erforderlich ist, um den Porenraum eines Gramms trockenes Sorbens (vorzugsweise stationäre Phase) vollständig zu füllen. Als Lösungsmittel können hier sowohl reines Wasser oder wässrige Medien als auch organische Lösungsmittel mit hoher Polarität wie Dimethylformamid dienen. Falls das Sorbens beim Befeuchten sein Volumen vergrößert (Quellung), wird die dafür aufgewendete Lösungsmittelmenge automatisch erfasst. Zur Messung der WAK wird eine genau gewogene Menge des porösen anorganischen Trägermaterials mit einem Überschuss gut benetzenden Lösungsmittels durchfeuchtet und überschüssiges Lösungsmittel aus dem Zwischenkornvolumen in einer Zentrifuge durch Rotation entfernt. Das Lösungsmittel innerhalb der Poren des Sorbens bleibt auf Grund der Kapillarkräfte in den Poren zurück. Die Masse des zurückgehaltenen Lösungsmittels wird durch Wägung ermittelt und über die Dichte des Lösungsmittels ins Volumen umgerechnet. Die WAK eines Sorbens wird als Volumen pro Gramm trockenes Sorbens (mL/g) berichtet.

Während der Vernetzung in Schritt (b) wird das Lösungsmittel durch Trocknung des Materials bei Temperaturen im Bereich von 40°C bis 100°C, stärker bevorzugt im Bereich von 50°C bis 90°C und am stärksten bevorzugt im Bereich von 50°C bis 75°C entfernt. Hierbei wird insbesondere bei einem Druck im Bereich von 0,01 bis 1 bar getrocknet, stärker bevorzugt bei einem Druck im Bereich von 0,01 bis 0,5 bar.

Das Vernetzen des Polyamins in den Poren des anorganischen Trägermaterials in Schritt (b) des erfindungsgemäßen Verfahrens erfolgt vorzugsweise so, dass der Vernetzungsgrad des Polyamins mindestens 10 % beträgt, bezogen auf die Gesamtzahl der vernetzbaren Gruppen des Polyamins. Der Vernetzungsgrad kann durch die entsprechend gewünschte Menge an Vernetzungsmittel eingestellt werden. Dabei wird angenommen, dass 100 Mol-% des Vernetzungsmittels reagiert und Vernetzungen bildet. Dies kann durch analytische Verfahren wie durch MAS-NMR Spektroskopie und quantitative Bestimmung der Menge des Vernetzungsmittels in Bezug auf die Menge des eingesetzten Polymers verifiziert werden. Dieses Verfahren ist erfindungsgemäß zu bevorzugen. Der Vernetzungsgrad kann jedoch auch durch IR-Spektroskopie bezogen auf beispielsweise C-O-C oder OH-Schwingungen unter Verwendung einer Kalibrierungskurve bestimmt werden. Beide Verfahren sind analytische Standardverfahren für einen Fachmann in diesem Gebiet. Der maximale Vernetzungsgrad liegt vorzugsweise bei 60 %, stärker bevorzugt bei 50 % und am stärksten bevorzugt bei 40 %. Wenn der Vernetzungsgrad oberhalb der angegebenen Obergrenze liegt, ist die Polyamin-Beschichtung nicht hinreichend flexibel. Ist der Vernetzungsgrad unterhalb der angegebenen Untergrenze sind die daraus resultierenden porösen Partikel aus dem vernetzten Polyamin nicht rigide genug, um beispielsweise als Partikel einer chromatographischen Phase oder in einer Wasserreinigungskartusche verwendet zu werden, bei der zum Teil auch höhere Drücke angelegt werden. Werden die resultierenden porösen Partikel aus dem vernetzten Polyamin direkt als Material für eine chromatographische Phase verwendet, so liegt der Vernetzungsgrad des Polyamins vorzugsweise bei mindestens 20 %.

Das für die Vernetzung verwendete Vernetzungsmittel weist vorzugsweise zwei, drei oder mehr funktionelle Gruppen auf, durch deren Bindung an das Polyamin die Vernetzung erfolgt. Das Vernetzungsmittel, das zur Vernetzung des in Schritt (b) aufgebrachten Polyamins verwendet wird, wird vorzugsweise aus der Gruppe ausgewählt, die aus Dicarbonsäuren, Tricarbonsäuren, Harnstoff, Bis-Epoxiden oder Tris-Epoxiden, Diisocyanaten oder Triisocyanaten, Dihalogenalkylen oder Trihalogenalkylen und Halogenepoxiden besteht, wobei Dicarbonsäuren, Bis-Epoxide und Halogenepoxide bevorzugt sind, wie beispielsweise Terephthalsäure, Biphenyldicarbonsäure, Ethylenglykoldiglycidylether (EGDGE), 1,12-bis-(5-Norbornen-2,3-dicar-boximido)-decandicarbonsäure und Epichlorhydrin, wobei Ethylenglykoldiglycidylether, 1,12-bis-(5-Norbornen-2,3-dicarboximido)-decandicarbonsäure und Epichlorhydrin stärker bevorzugt sind. Das Vernetzungsmittel ist in einer Ausführungsform der vorliegenden Erfindung vorzugsweise ein lineares, Molekül mit einer Länge zwischen 3und 20 Atomen.

Das in Schritt (a) eingesetzte Polyamin weist vorzugsweise eine Amino-Gruppe pro Wiederholungseinheit auf. Unter einer Wiederholungseinheit versteht man die kleinste Einheit eines Polymers, die sich in periodischen Abständen entlang der Polymerkette wiederholt. Polyamine sind vorzugsweise Polymere, die primäre und/oder sekundäre Amino-Gruppen aufweisen. Es kann ein Polymer aus den gleichen Wiederholungseinheiten sein, es kann aber auch ein Co-Polymer sein, das vorzugsweise als Co-Monomere einfache Alkenmonomere oder polare, inerte Monomere wie Vinylpyrrolidon aufweist.

Beispiele für Polyamine sind die folgenden: Polyamine, wie jegliche Polyalkylamine, z.B. Polyvinylamin, Polyalkylamin, Polyethylenimin und Polylysin etc. Unter diesen sind Polyalkylamine bevorzugt, noch stärker bevorzugt Polyvinylamin und Polyallylamin, wobei Polyvinylamin insbesondere bevorzugt ist.

Das bevorzugte Molekulargewicht des in Schritt (a) des erfindungsgemäßen Verfahrens eingesetzten Polyamins liegt vorzugsweise im Bereich von 5.000 bis 50.000 g/mol, was insbesondere für das angegebene Polyvinylamin gilt.

Unter dem Herauslösen des anorganischen Trägermaterials in Schritt (c) versteht man, dass aus dem nach Schritt (b) erhaltenen Kompositpartikeln aus porösen anorganischen Trägermaterial und dem aufgebrachten Polyamin das anorganische Trägermaterial entfernt wird. Der Schritt (c) des Herauslösens des anorganischen Trägermaterials unter Erhalt der porösen Partikel aus einem vernetzten Polymer erfolgt vorzugsweise in einer wässrig alkalischen Lösung mit einem pH größer 10, stärker bevorzugt pH größer 11, noch stärker bevorzugt pH größer 12. Hierbei wird als Base vorzugsweise ein Alkalihydroxid, stärker bevorzugt Kaliumhydroxid oder Natriumhydroxid, noch stärker bevorzugt Natriumhydroxid verwendet. Dabei ist es bevorzugt, dass die Konzentration des Alkalihydroxids in der wässrigen Lösung mindestens 10 Gew.-%, noch stärker bevorzugt 25 Gew.-%, bezogen auf das Gesamtgewicht der Lösung ist. Dabei werden im Schritt (c) des erfindungsgemäßen Verfahrens die aus Schritt (b) erhaltenen Partikel mit der entsprechenden wässrig alkalischen Lösung für mehrere Stunden in Kontakt gebracht. Anschließend wird das aufgelöste anorganische Trägermaterial so lange mit Wasser aus den porösen Partikeln aus dem vernetzten Polymer gewaschen, dass das anorganische Trägermaterial im Wesentlichen nicht mehr im Produkt enthalten ist. Dies hat den Vorteil, dass bei der Verwendung der erfindungsgemäß hergestellten porösen Partikel aus einem vernetzten Polymer beispielsweise als Bindungsmaterial von Metallen, dieses nur noch aus organischem Material besteht und somit unter Verbleib bzw. Rückgewinnung der Metalle vollständig bzw. rückstandsfrei verbrannt werden kann.

Weiterhin kann das vernetzte Polyamin nach Schritt (c) in seinen Seitengruppen derivatisiert werden. Dabei wird vorzugsweise ein organischer Rest an das Polymer gebunden. Dieser Rest kann jeder denkbare Rest sein, wie eine aliphatische und aromatische Gruppe, die auch Heteroatome aufweisen können. Diese Gruppen können auch mit anionischen oder kationischen Resten bzw. protonierbaren oder deprotonierbaren Resten substituiert sein. Wird das nach dem erfindungsgemäßen Verfahren erhaltene vernetzte poröse Polyamin zur Bindung von Metallen aus Lösungen verwendet, so ist die Gruppe, mit der die Seitengruppen des Polymers derivatisiert werden, eine Gruppe, die die Eigenschaft einer Lewis-Base aufweist. Unter einem organischen Rest, der die Eigenschaft einer Lewis-Base aufweist, versteht man insbesondere Reste, die eine Komplexbindung mit dem zu bindenden Metall eingehen. Organische Reste, die eine Lewis-Base aufweisen, sind beispielsweise solche, die Heteroatome mit freien Elektronenpaaren, wie N, O, P, As oder S aufweisen.

Bevorzugte organische Reste für die Derivatisierung des Polymers sind die nachfolgend dargestellten Liganden:

| **Name** | **Struktur des Liganden auf dem Polymer** |
|---|---|
| **6-Aminonicotinsäuregruppen** | 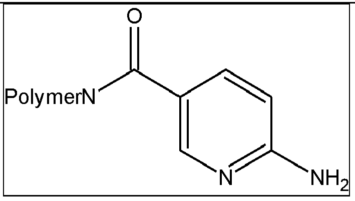 |
| **Arginin gruppen** | 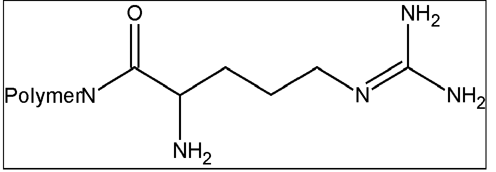 |
| **Bernsteinsäure-N-Methyl-Piperazin** | 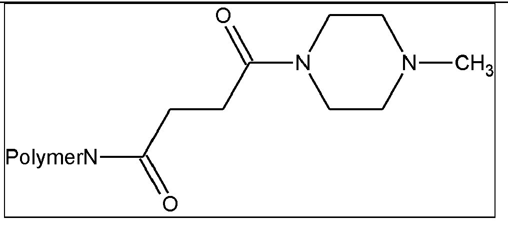 |
| **4-[(4-aminopiperazin-1-yl)amino]-4-oxobu-tansäure-gruppen** | 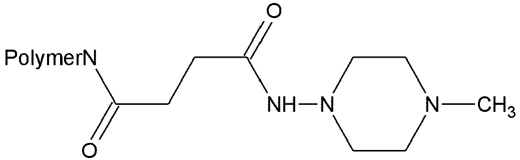 |
| **Bernsteinsäuregruppen** | 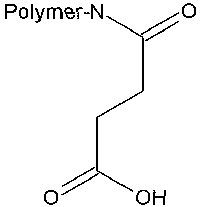 |
| **Creatingruppen** | 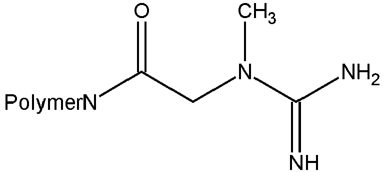 |
| **Diaminobicyclooctancarbonsäure** | 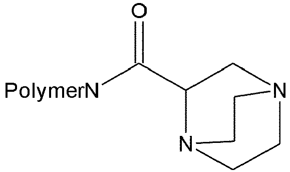 |
| **Diethylentriamin** | 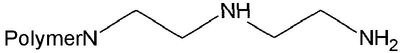 |
| **Diglykolsäuregruppen** | 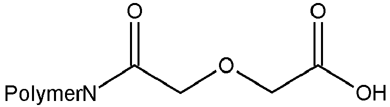 |
| **Ethylendiamintetraessigsäuregruppen Anbindung kann an 1-4 Säuregruppen erfolgen** | 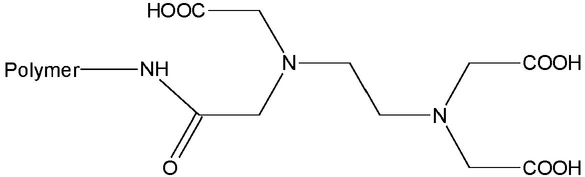 |
| **Ethylphosphonylcarbonylgruppe** | 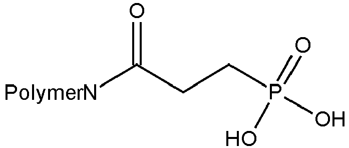 |
| **N-Ethanthiol-Gruppen** | 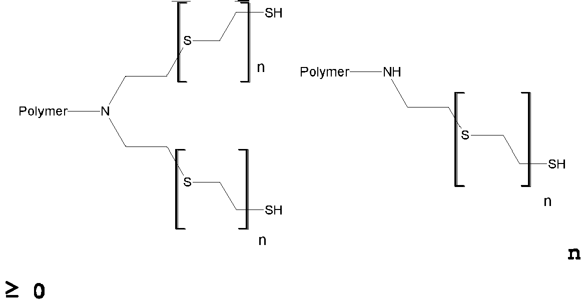 |
| **N,N-Diethansäure-Gruppen Die Chloressigsäure kann die Amino-Gruppe mono oder Di-substituieren** (EtSr) | 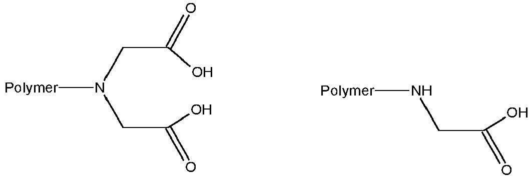 |
| **4-Aminobuttersäuregruppen** | 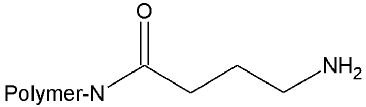 |
| **Glutarsäuregruppen** | 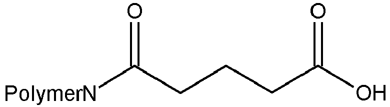 |
| **4-Piperidincarbonsäuregruppen** | 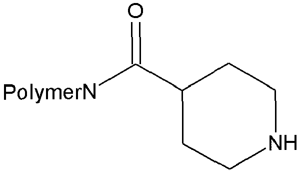 |
| **4-Imidazolylacetylgruppen** | 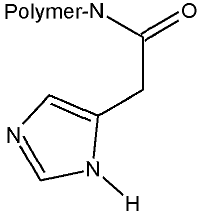 |
| **4-Imidazolylacrylsäuregruppen** | 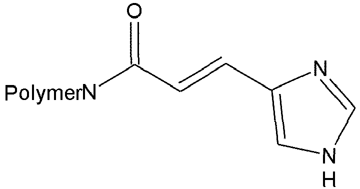 |
| **Isonicotinsäuregruppen** | 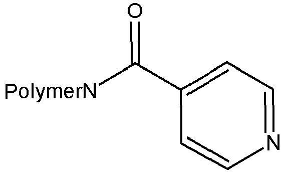 |
| **Lysinsäuregruppen** | 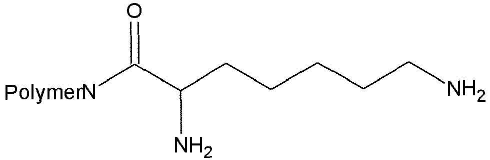 |
| **Methylthioharnstoffgruppen** | 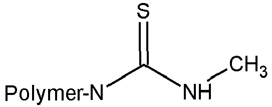 |
| **Nitrilotriessigsäure Anbindung erfolgt über 1-3 Carbonsäuregruppen** | 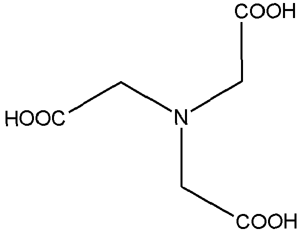 |
| **Phosphorsäuregruppe Kann vernetzten wirken.** | 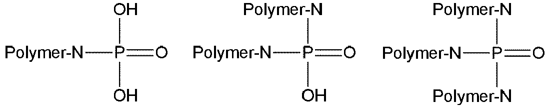 |
| **Prolin** | 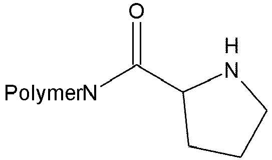 |
| **Purin-6-carbonsäuregruppen** | 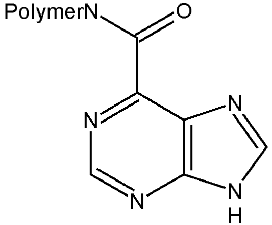 |
| **Pyrazin-2-carbonsäuregruppen** | 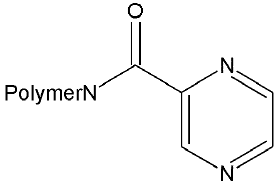 |
| **Thymin-N-essigsäuregruppen** | 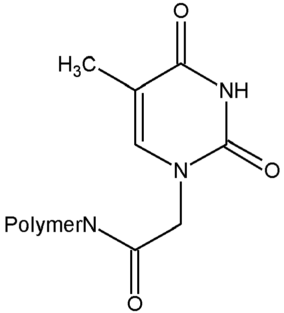 |
| **Theophyllin-7-essigsäuregruppen** | 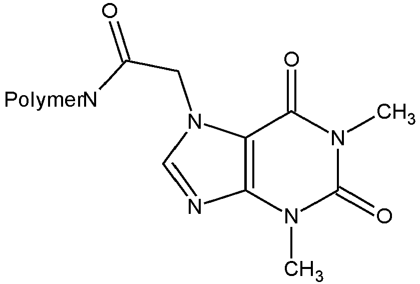 |
| **Zitronensäuregruppen** | 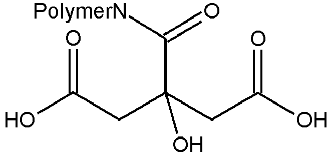 |

Insbesondere bevorzugt sind die Liganden PVA, d.h. die Aminogruppe des PVA, EtSr, NTA, EtSH, MeSH, EDTA und iNic oder Kombinationen der genannten. Beispielsweise ist eine Kombination von PVA mit EtSr, NTA oder EtSH besonders bevorzugt.

Besonders bevorzugt wird als Polymer in dem erfindungsgemäßen Verfahren Polyvinylamin eingesetzt, da die Aminogruppen des Polyvinylamins selbst Lewis-Basen darstellen und zudem durch ihre Eigenschaft als nukleophile Gruppen leicht an ein Molekül mit einem elektrophilen Zentrum ankoppelbar sind. Dabei werden vorzugsweise Kopplungsreaktionen verwendet, bei denen ein sekundäres Amin und nicht ein Amid entsteht, da dabei die Lewis-Basizität durch Bildung eines sekundären Amins nicht verloren geht.

Die vorliegende Erfindung betrifft auch poröse Partikel aus einem vernetzten Polymer, die nach dem vorstehenden erfindungsgemäßen Verfahren erhältlich sind. Dabei ist es bevorzugt, dass die nach dem erfindungsgemäßen Verfahren hergestellten Partikel einen maximalen Quellfaktor in Wasser von 300 % aufweisen, wenn man davon ausgeht, dass ein Wert von 100 % für die trockenen Partikel gilt. In anderen Worten können die erfindungsgemäßen Partikel maximal in Wasser um das Dreifache an Volumen zunehmen.

Ein weiterer Gegenstand der vorliegenden Anmeldung sind auch poröse Partikel aus einem vernetzten Polyamin, wobei auch diese Partikel einen maximalen Quellfaktor von 300 % aufweisen, wenn man davon ausgeht, dass der Prozentsatz der trockenen Partikel bei 100 % liegt. In anderen Worten können auch diese erfindungsgemäßen porösen Partikel bei Quellung in Wasser eine maximale Volumenzunahme um das Dreifache haben.

Noch bevorzugter ist es jedoch, dass die nach dem erfindungsgemäßen Verfahren hergestellten Partikel bzw. die erfindungsgemäßen Partikel einen maximalen Quellfaktor in Wasser von 250 %, noch stärker bevorzugt 200 % und am stärksten bevorzugt von wemiger als 150 % aufweisen, da ansonsten die Rigidität der erhaltenen Teilchen zumindest für chromatographische Anwendungen und in Trinkwasserkartuschen unter Druck nicht ausreichend hoch ist.

Die nach dem erfindungsgemäßen Verfahren hergestellten bioziden, porösen Partikel sind vorzugsweise aus einem vernetzten Polyamin hergestellt. Das Polyamin bzw. die daraus bestehenden porösen Partikel weisen vorzugsweise eine durch Titration bestimmte Konzentration der Amino-Gruppen von mindestens 300 µmol/mL, stärker bevorzugt mindestens 600 µmol/mL, und noch stärker bevorzugt von mindestens 1000 µmol/mL auf. Unter der durch Titration bestimmten Konzentration der Aminogruppen wird die Konzentration verstanden, die gemäß dem im Beispiels-Teil dieser Anmeldung angegebenen analytischen Methoden durch Durchbruchsmessung mit 4-Toluolsulphonsäure erhalten wird.

Die erfindungsgemäß hergestellten Partikel weisen vorzugsweise eine Trockenschüttdichte im Bereich von 0,25 g/mL bis 0,8 g/mL, noch stärker bevorzugt 0,3 g/mL bis 0,7 g/mL auf. In anderen Worten sind die porösen Partikel insgesamt äußerst leichte Partikel, was durch die erhaltene hohe Porosität gewährleistet ist. Trotz der hohen Porosität und dem geringen Gewicht der Partikel weisen diese eine relativ hohe mechanische Festigkeit bzw. Rigidität auf und können auch in chromatographischen Anwendungen als Phasen unter Druck verwendet werden.

Die durch inverse Größenausschlusschromatographie ermittelte mittlere Porengröße der erfindungsgemäß hergestellten oder erfindungsgemäßen bioziden, porösen Partikel liegt vorzugsweise im Bereich von 1 nm bis 100 nm, stärker bevorzugt 2 nm bis 80 nm.

Die erfindungsgemäß hergestellten bioziden, porösen Partikel sind vorzugsweise Partikel, die eine ähnliche Form aufweisen, wie sie das herausgelöste poröse anorganische Trägermaterial hatte, jedoch mit der Maßgabe, dass die erfindungsgemäßen bioziden, porösen Partikel im Wesentlichen mit ihrem Material das Porensystem des herausgelösten porösen anorganischen Trägermaterials widerspiegeln, d.h. sie sind im Falle der idealen Porenfüllung in Schritt (b) des erfindungsgemäßen Verfahrens das inverse Porenabbild des verwendeten porösen anorganischen Trägermaterials. Die erfindungsgemäßen bioziden, porösen Partikel liegen vorzugsweise in einer im Wesentlichen sphärischen Form vor. Deren mittlere Partikelgröße liegt vorzugsweise im Bereich von 5 µm bis 1000 µm, stärker bevorzugt im Bereich von 20 bis 300 µm.

Weiterhin sind die erfindungsgemäßen, bioziden porösen Partikel aus dem vernetzten Polymer dadurch gekennzeichnet, dass sie im Wesentlichen aus dem vernetzten Polymer bestehen. "Im Wesentlichen" heißt in diesem Fall, dass nur unvermeidliche Rückstände von beispielsweise anorganischem Trägermaterial, in den porösen Partikeln noch enthalten sein können, deren Anteil jedoch vorzugsweise unter 2000 ppm, noch stärker bevorzugt 1000 ppm und am stärksten bevorzugt 500 ppm liegt. In anderen Worten ist es bevorzugt, dass die erfindungsgemäßen bioziden, porösen Partikel aus dem vernetzten Polymer im Wesentlichen frei von einem anorganischen Material, wie beispielsweise dem Material des anorganischen Trägermaterials sind. Dies ist auch weiter oben in Verbindung mit dem Schritt (c) des erfindungsgemäßen Verfahrens gemeint, wenn davon gesprochen wird, dass das anorganische Trägermaterial im Wesentlichen nicht mehr im Produkt enthalten ist.

Eine weitere Ausführungsform der vorliegenden Erfindung betrifft die Verwendung der erfindungsgemäßen bioziden, porösen Partikel bzw. der erfindungsgemäß hergestellten bioziden, porösen Partikel zur Entfernung von biologischen Verunreinigungen und zur Abtrennung von Metall-Ionen aus Lösungen, insbesondere Wasser. Hierbei werden die erfindungsgemäßen bioziden, porösen Partikel bzw. erfindungsgemäß hergestellten bioziden, porösen Partikel vorzugsweise in Filtrations-Verfahren bzw. einer Festphasenextraktion verwendet, die die Entfernung von biologischen Verunreinigungen aus Wasser oder die Abtrennung von Metall-haltigen Ionen aus Lösungen erlauben. Das erfindungsgemäße Material kann beispielsweise auf einfache Art und Weise in einem Rührkessel bzw. in einer *"fluidized* bed"-Anwendung verwendet werden, bei der das Material einfach in eine biologisch verunreinigte und Metall-enthaltende Lösung hineingegeben und für eine bestimmte Zeit gerührt wird.

Die vorliegende Erfindung betrifft auch eine Filterkartusche, beispielsweise zur Aufbereitung von Trinkwasser, die erfindungsgemäße biozide, poröse Partikeln aus einem vernetzten Polymer enthält. Die Filterkartusche ist vorzugsweise derart ausgeformt, dass das aufzubereitende Trinkwasser durch die Kartusche hindurchlaufen kann und in ihrem Inneren mit den erfindungsgemäßen porösen Partikeln aus einem vernetzten Polymer in Kontakt kommt, wobei biologische Verunreinigungen entfernt und Metall-haltige Ionen aus dem Wasser entzogen werden.

Die Filterkartusche kann ein zusätzliches Material zum Entfernen von Mikroschadstoffen enthalten. Hierfür wird vorzugsweise Aktivkohle eingesetzt. Dabei können die verschiedenen Materialien in getrennten Zonen innerhalb der Filterkartusche angeordnet sein, oder in einer Mischung aus den beiden Materialien. Die Filterkartusche kann auch mehrere unterschiedliche Materialien (mit und ohne Derivatisierung) enthalten, die nach dem erfindungsgemäßen Verfahren hergestellt wurden.

Die Filterkartusche kann in allen denkbaren Größen ausgestaltet sein. Beispielsweise kann die Filterkartusche in einer Größe ausgestaltet sein, die für den täglichen Trinkwasserbedarf in einem Haushalt ausreicht. Die Filterkartusche kann aber auch eine Größe aufweisen, die es erlaubt den Trinkwasserbedarf für mehrere Haushalte zu decken, d.h. beispielsweise einen Bedarf von mehr als 5 Liter täglich.

Die Filterkartusche kann beispielsweise die Form eines linear durchströmten Zylinders oder die Form eine radial durchströmten Hohlzylinders haben.

Die vorliegend Erfindung soll nun anhand der folgenden Beispiele erläutert werden, die jedoch nur als exemplarisch anzusehen sind:

### Beispiele:

### Analytische Verfahren:

Bestimmung der Konzentration der Amino-Gruppen eines Sorbens mit Durchbruchsmessung mit 4-Toluolsulphonsäure (Titrationsanalyse):
Die dynamische Anionenaustauschkapazität wird mit einer Säule der zu prüfenden stationären Phase bestimmt. Hierzu werden zunächst alle austauschbaren Anionen in der Säule gegen Trifluoracetat ausgetauscht. Dann wird die Säule mit einer wässrigen Reagenzlösung von Toluol-4-Sulphonsäure durchspült, bis diese Lösung in gleicher Konzentration am Ende der Säule wieder austritt (Durchbruch). Aus der Konzentration der Toluol-4-Sulphonsäurelösung, der Flussrate und der Fläche des Durchbruchs im Chromatogramm wird die von der Säule gebundene Menge Toluol-4-Sulphonsäure berechnet. Die so ermittelte Menge an Toluol-4-Sulphonsäure gibt die Konzentration der Amino-Gruppen des Sorbens an.

Die dynamische Anionenaustauschkapazität für Toluol-4-Sulphonsäure in Wasser wird auf das Phasenvolumen bezogen und in mmol pro Liter (mM/L) berichtet.

### Beispiel 1: Herstellung von erfindungsgemäßen porösen Partikeln eines vernetzten Polymers:

### Herstellung Polymeradsorbat

800 g Trägermaterial (Grace Kieselgel SP542-12110) werden direkt in Lödige VT5 gesaugt. Das Kieselgel wird auf 10 °C temperiert. Der Mischer wird mit 120 Upm betrieben. Dann werden 1133 g auf 10°C gekühlte Polymerlösung PC 16012 (Polymergehalt 12%) in ein Gefäß eingewogen und mit 27,5 g EGDGE versetzt. Die Mischung wird innerhalb von 2 min in dem Mischer gegeben und für 1 h bei 10 °C gemischt. Anschließend wird das Polymeradsorbat bei 80 °C und 50 mbar getrocknet (ca. 2 h). Das Polymeradsorbat wurde dann auf 10 °C heruntergekühlt.

Für die 2. Beschichtung wurden 733 g auf 10°C gekühlte Polymerlösung PC 16012 (Polymergehalt 12%) in ein Gefäß eingewogen und mit 18 g EGDGE versetzt. Die Polymerlösung wurde innerhalb von 2 min in die Mischtrommel gefüllt. Das Polymeradsorbat wurde für 1 h bei 10 °C gemischt. Anschließend wurde die Temperatur im Lödige wieder auf 65 °C für 1 h erhöht. Das Polymeradsorbat wurde mit 4 L VE- Wasser versetzt und Suspension aus dem Lödige VT auf einen Nutsche gefahren. Dort wurde das Polymeradsorbat mit 10 BV VE-Wasser gewaschen.

### Vernetzung

1 L sedimentiertes Polymeradsorbat werden mit 500 L VE Wasser in einen 2,5 L Reaktor gegeben und unter Rühren auf 85°C erhitzt. Anschließend werden 125 g Epichlorhydrin so langsam zugegeben, sodass die Temperatur im Reaktor 90°C nicht überschreitet. Anschließend wird noch 20 min weiter gerührt bevor 83 g Diaminoethylen langsam zugesetzt werden. Nach weiteren 20 min werden nochmal 125 g Epichlorhydrin zugegeben. Dann nochmal 83 g Diaminoethylen und abschließend nochmal 125 g Epichlorhydrin. Dann wird die Reaktion noch 20 min bei 85 °C weitergerührt. Die Reaktionsmischung wird dann auf 25 °C abgekühlt und es werden 500 mL 50% NaOH zugesetzt und für eine weitere Stunde gerührt.

Die Templatphase wird dann auf eine Filternutsche überführt und mit folgenden Lösungsmitteln gewaschen:
- 3 BV 1 M NaOH
- 3 BV Wasser
- 3 BV 2 M HCl
- 3 BV Wasser
- 6 BV 1 M NaOH
- 6 BV Wasser

Das Produkt ist wird als feuchter Filterkuchen erhalten.

### Beispiel 2: Metallaufreinigung bei gleichzeitiger Entfernung von Bakterien

Es wurden Metallaufreinigungsversuche gemäß WO 2017/089523 und WO 2016/030021 mit einem Sorbens nach Stand der Technik sowie mit dem oben hergestellten Sorbens durchgeführt, wobei die eingesetzten Lösungen zusätzlich mit Bakterienstämmen von Escherichia coli, Enterococcus faecalis, Pseudomonas aeruginosa und Staphylococcus aureus kontaminiert wurden. Es zeigt sich eine identische Performance bei der Metallaufreinigung wie bei den nicht-kontaminierten Lösungen. Allerdings konnten nach der Aufreinigung keinerlei Bakterien mehr in der gereinigten Lösung nachgewiesen werden. Ebenso blieb eine Biofilm-Bildung vollständig aus. Das herkömmlich hergestellte Material zeigt hingegen Biofilmbildung und nach der Filtration noch große Mengen der Bakterienstämme. Weiterhin verliert das herkömmliche Material, wohl bedingt durch die Biofilm-Bildung deutlich an Kapazität.

### Anwendungsbeispiele (A):

### Beispiel A1: Entfernung von E. coli aus Trinkwasser

Je 7 ml einer Lösung von E. coli mit einer Bakterienlast von OD₆₀₀ 1 × 10⁷ CFU/ml werden mit einer Flussrate von 0,5 ml/min auf zwei Kartuschen (Bettvolumen 7 ml) mit bakteriozidem instrAction Harz gegeben und mit 14 ml Wasser gespült. Die Eluate und werden aufgefangen und auf Bakterienlast in folgender Weise untersucht:
Die aufgefangenen Fraktionen werden für 12 min zentrifugiert (4500 u/min). Der resuspendierte Rückstand wird ebenso wie der Überstand auf LB Agar ausplattiert. Die Platten werden über Nacht bei 37°C inkubiert und die entstandenen Kolonien gezählt.

Die Kartuschen werden über Nacht ebenfalls bei Raumtemperatur und 37°C und am nächsten Tag erneut mit 14 ml (2 BV) sterilem Wasser gewaschen. Der Durchlauf wird erneut aufgefangen und wie oben auf Bakterien analysiert. Dieser Vorgang wird für 4 Tage wiederholt. Die nachfolgende Tabelle zeigt das Ergebnis der Untersuchungen:

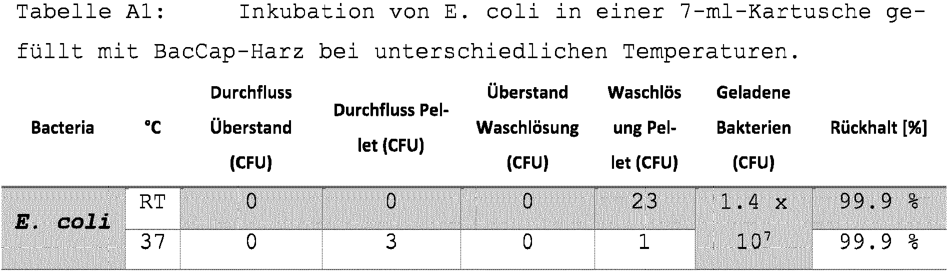

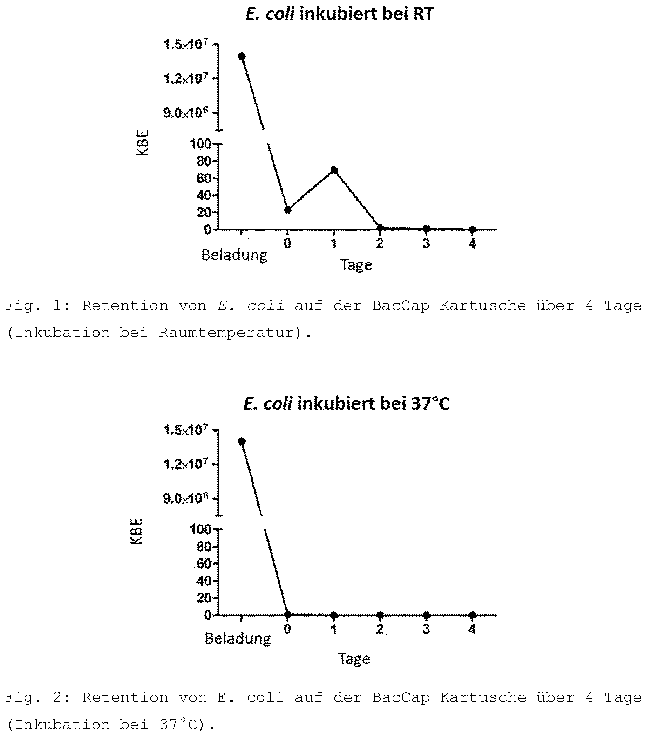

Figur 1 und 2 zeigen den Verlauf über vier Tage.

Die 7 ml-Kartusche, gefüllt mit instrAction Harz, bindet fest und irreversibel 1.4 × 10⁷ CFU *E coli* über einen Zeitraum von vier Tagen, unabhängig davon, ob die Kartusche bei Raumtemperatur oder 37°C inkubiert wird.

### Beispiel A2: Entfernung von Enterococcus faecalis aus Wasser

Je 7 ml einer Lösung von **Enterococcus faecalis** mit einer Bakterienlast von 3,2 - 3,9 × 10⁸ CFU/ml werden mit einer Flussrate von 0,5 ml/min auf zwei Kartuschen mit bakteriozidem instrAction Gel gegeben und mit 14 ml Wasser gespült. Die Eluate und werden aufgefangen und auf Bakterienlast in folgender Weise untersucht:
Die aufgefangenen Fraktionen werden für 12 min zentrifugiert (4500 u/min). Der resuspendierte Rückstand wird ebenso wie der Überstand auf Blut-Agar-Platten ausplattiert. Die Platten werden über Nacht bei 37°C inkubiert und die entstandenen Kolonien gezählt.

Die Kartuschen werden über Nacht ebenfalls bei Raumtemperatur und 37°C und am nächsten Tag erneut mit 14 ml (2 BV) sterilem Wasser gewaschen. Der Durchlauf wird erneut aufgefangen und wie oben auf Bakterien analysiert. Dieser Vorgang wird für 4 Tage wiederholt. Die nachfolgende Tabelle zeigt das Ergebnis der Untersuchungen:

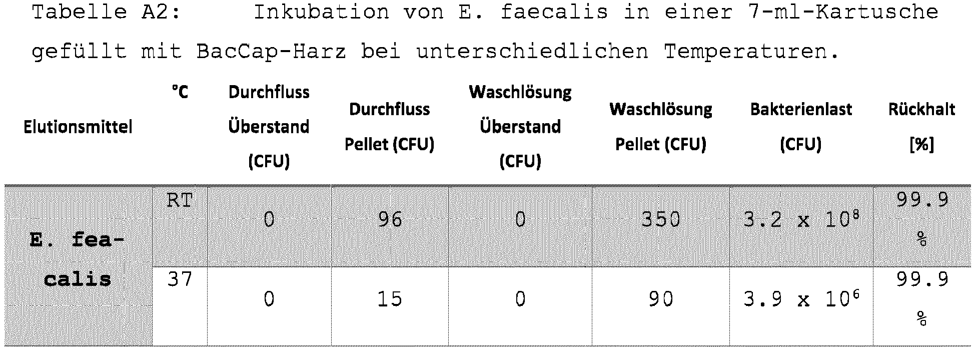

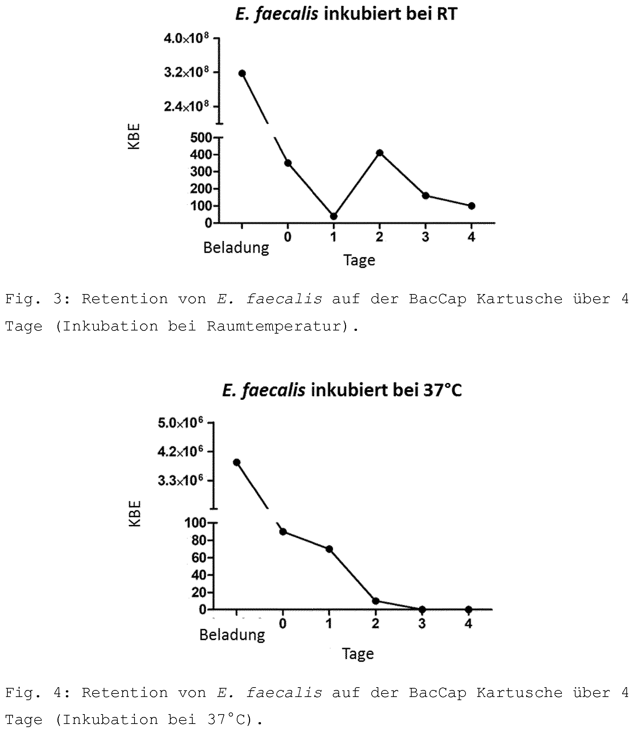

Figuren 3 und 4 zeigt den Verlauf über vier Tage.

Die 7 ml-Kartusche, gefüllt mit instrAction Harz, bindet fest und irreversibel 1.4 × 10⁷ CFU E. *faecalis* über einen Zeitraum von vier Tagen, unabhängig davon, ob die Kartusche bei Raumtemperatur oder 37°C inkubiert wird.

### Beispiel A3: Entfernung von E. Coli aus sterilem Wasser und Trinkwasser

Zwei Kartuschen werden wie oben vorbereitet und behandelt und mit E. coli (3-5 × 10⁶ CFU) beladen, wobei in einem Fall steriles Wasser und im anderen Fall Trinkwasser als Spül- und Elutionslösung verwendet wird. Die Kartuschen werden an zwei aufeinanderfolgenden Tagen gespült:

Die nachfolgende Tabelle zeigt das Ergebnis der Untersuchung:

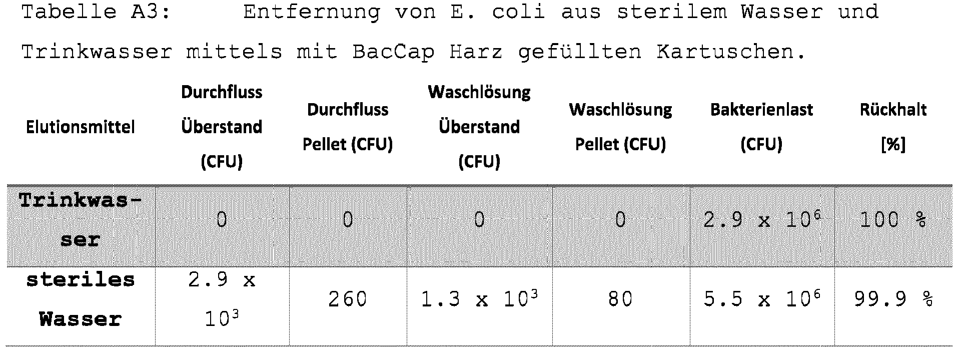

Die E. coli Bakterien werden unabhängig vom Waschlösungsmittel (steriles Wasser oder Leitungswasser) zurückgehalten.

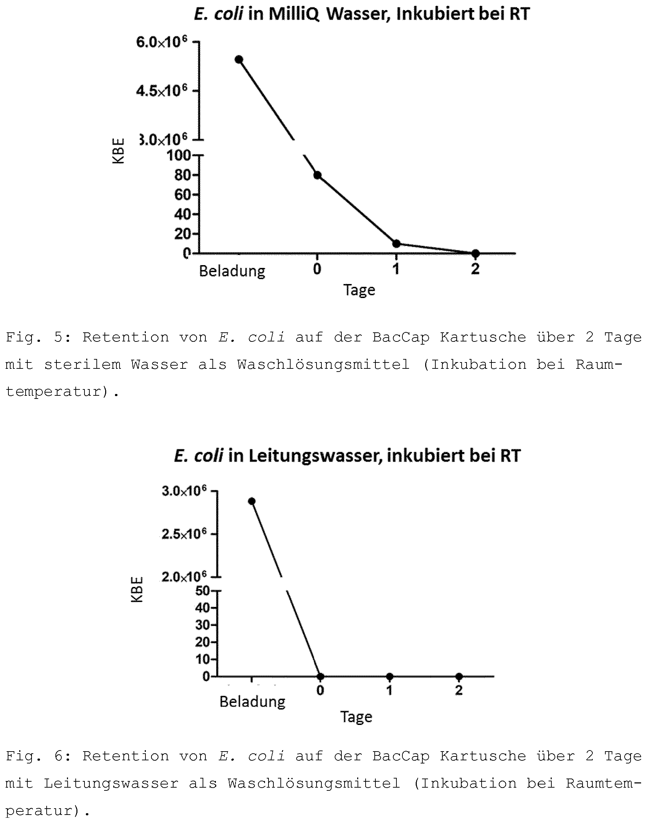

Figur 5 zeigt das Ergebnis über zwei Tage für die Waschung mit sterilem Wasser:
Figur 6 zeigt das Ergebnis über zwei Tage für die Waschung mit Leitungswasser:

Die anwendungsnahen Ergebnisse zeigen, dass die aufgegebene Menge an E. Coli Bakterien aus Trinkwasser sicher und vollständig entfernt werden können.

### Beispiel A4: Kinetische Untersuchungen von zwei instrAction BacCap-T-Harzen mit unterschiedlicher Partikelgröße im Batch-Verfahren:

Eine Suspension von 1 ml 1×10⁶ CFUE. *coli* DH_{5α}, in 11 ml Leitungswasser wird zu 500 mg instrAction BacCap Harz (Batch BV 16037: 100 µm und BV 16092: 425 µm) gegeben und bei Raumtemperatur auf einem Rotationsschüttler für 25 h inkubiert. In folgenden Intervallen werden Proben genommen und mit Hilfe von LB Agar-Platten auf kolonie-bildende Einheiten untersucht: 0, 1, 3, 6, 12 und 25 Stunden.

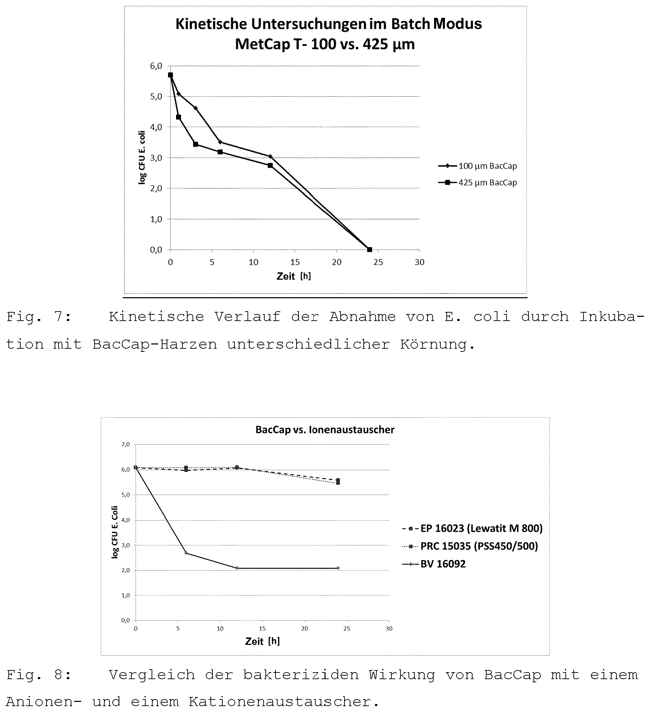

Das Ergebnis der Untersuchungen ist in Figur 7 visualisiert:
Beide Harze zeigen einen ähnlichen kinetischen Verlauf in der Abnahme der Bakterienkonzentration mit der Zeit, unabhängig von ihrer Partikelgröße.

Dieses Ergebnis zeigt, dass es sich um ein allgemeines Wirkprinzip der instrAction MetCap-T Harze handelt. Die antibakterielle Wirkung ist von der Partikelgröße und damit vom Ausgangskieselgel unabhängig.

Aus Daten wird eine Halbwertszeit von ca. 10-15 min abschätzt.

### Beispiel A5: Vergleich mit kommerziellen Harzen

Kationen- und Anionenaustauscher, sowie ein blankes Polystyrol-Harze werden im Bereich der Trinkwasserreinigung zur Enthärtung und zur Entfernung von Schadstoffen eingesetzt. Aus diesem Grund wurde ein quartärer Ammonium-Anionenaustauscher und ein sulfonierter Polystyrol-Kationenaustauscher sowie reines Polystyrol im Vergleich mit BacCap-Harzen untersucht.

Reines Polystyrol erwies sich als nicht benetzbar mit der Bakteriensuspension und wurde daher nicht weiter untersucht.

Eine Suspension von 1 ml 1×10⁶ CFUE. *coli* DH_{5α}, in 11 ml Leitungswasser wird zu 500 mg instrAction BacCap Harz (BV 16092: 425 µm), einem Kationenaustauscher (PRC 15035, 500 µm sulfoniertes Polystyrol) und einen Anionenaustauscher (Lewatit M 800) gegeben und bei Raumtemperatur auf einem Rotationsschüttler für 25 h inkubiert. In folgenden Intervallen werden Proben genommen und mit Hilfe von LB Agar-Platten auf koloniebildende Einheiten untersucht: 0, 6, 12 und 24 Stunden.

Das Ergebnis für die beiden Ionenaustauscher ist in Figur 8 gezeigt:
Das BacCap-Material (500 µm) reduziert die Bakterienkonzentration innerhalb von 6 h um 4 Log-Stufen, während die einfachen Ionenaustauscher (sulfoniertes Polystyrol als Kationenaustauscher und quaternäres Ammonium an Polystyrol als Anionenautauscher) keine Reduktion zeigen.

Dies deckt sich mit der aus der Literatur bekannten Biofilm-Bildung auf kommerziellen Ionenaustauschern.

### Beispiel A6: Abschätzung der Kapazität

Eine Suspension von 1 ml 1×10⁶ CFUE. *coli* DH_{5α}, in 11 ml Leitungswasser wird jeweils zu 50, 100 und 250 mg instrAction BacCap Harz (Batch BV 16037: 100 µm) gegeben und bei Raumtemperatur auf einem Rotationsschüttler für 25 h inkubiert. In folgenden Intervallen werden Proben genommen, ausplattiert und auf Kolonie-bildende Einheiten untersucht: 0, 6, 12 und 24 Stunden.

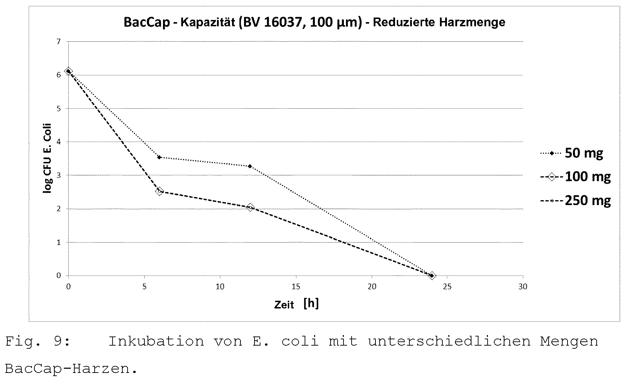

Die Daten (siehe Figur 9) zeigen keine Erschöpfung der Bakterienentfernung selbst bei drastischer reduzierter Harzmenge. Lediglich eine Verlangsamung der Bakterienentfernung in Abhängigkeit von der Harzmenge ist bei dem Einsatz von 50 mg Harz gegenüber den Ansätzen mit 100 und 250 mg Harz zu beobachten. Die Kurven für die Inkubation von 100 mg Harz und 250 mg Harz mit der entsprechenden Bakterienmenge liegen direkt übereinander.

## Patentansprüche

1. Verfahren zur Herstellung von bioziden, porösen Partikeln aus einem vernetzten Polyamin, das die folgenden Schritte umfasst:
(a) Bereitstellen einer wässrigen Suspension enthaltend ein Polyamin, einen Vernetzer und ein poröses anorganisches Trägermaterial in Partikelform bei einer Temperatur kleiner oder gleich 10 °C in einem Mischer zum Beschichten des anorganischen Trägermaterials mit dem Polyamin;
(b) Vernetzen des Polyamins in den Poren des anorganischen Trägermaterials und gleichzeitiges Entfernen von Wasser;
(c) Herauslösen des anorganischen Trägermaterials unter Erhalt der bioziden porösen Partikel aus einem vernetzten Polyamin;
worin das poröse anorganische Trägermaterial ein Material ist, das sich in wässrig-alkalischen Bedingungen bei pH > 10 auflösen lässt.

2. Verfahren nach Anspruch 1, wobei die Schritte a) und b) wenigstens einmal wiederholt werden.

3. Verfahren nach einem der Ansprüche 1 bis 2, wobei das Vernetzen in einem Rührreaktor erfolgt.

4. Verfahren nach einem der Ansprüche 1 bis 3, wobei das Polyamin im nicht-entsalzten Zustand eingesetzt wird.

5. Verfahren nach einem der Ansprüche 1 bis 4, worin das Polyamin ein Polyvinylamin ist.

6. Biozide, poröse Partikel aus einem vernetzten Polyamin, die nach einem Verfahren nach einem der Ansprüche 1 bis 5 erhältlich oder hergestellt sind.

7. Verwendung biozider, poröser Partikel gemäß Anspruch 6 oder hergestellt nach einem Verfahren nach einem der Ansprüche 1 bis 5 zur Entfernung von biologischen Verunreinigungen aus Wasser durch Inkontaktbringung des kontaminierten Wassers mit den bioziden porösen Partikeln durch beispielsweise Filtration.

8. Verwendung nach Anspruch 7, wobei die biologischen Verunreinigungen Bakterien, Keime, Hefen, Pilze oder Viren sind.

9. Filterkartusche, die biozide, poröse Partikel gemäß Anspruch 6 oder hergestellt oder erhältlich nach einem Verfahren nach einem der Ansprüche 1 bis 5 enthält.

## Claims

1. Process for the preparation of biocidal, porous particles of a crosslinked polyamine, which comprises the following steps:
(a) providing an aqueous suspension containing a polyamine, a crosslinker and a porous inorganic substrate in particle form at a temperature lower than or equal to 10°C in a mixer for coating the inorganic substrate with the polyamine;
(b) crosslinking the polyamine in the pores of the inorganic substrate and simultaneously removing water;
(c) dissolving out the inorganic substrate to obtain the biocidal porous particles of a crosslinked polyamine; wherein the porous inorganic substrate is a material which can dissolve in aqueous alkaline conditions at pH > 10.

2. Process according to claim 1, wherein steps a) and b) are repeated at least once.

3. Process according to one of claims 1 to 2, wherein the crosslinking is effected in a stirred reactor.

4. Process according to one of claims 1 to 3, wherein the polyamine is used in the non-desalinated state.

5. Process according to one of claims 1 to 4, wherein the polyamine is a polyvinylamine.

6. Biocidal, porous particles of a crosslinked polyamine, which are obtainable or prepared according to a process according to one of claims 1 to 5.

7. Use of biocidal, porous particles according to claim 6 or prepared according to a process according to one of claims 1 to 5 for the removal of biological contaminants from water by bringing the contaminated water into contact with the biocidal porous particles by filtration, for example.

8. Use according to claim 7, wherein the biological contaminants are bacteria, germs, yeasts, fungi or viruses.

9. Filter cartridge, which contains biocidal, porous particles according to claim 6 or prepared or obtainable according to a process according to one of claims 1 to 5.

## Revendications

1. Procédé de préparation de particules poreuses biocides d'une polyamine réticulée, qui comprend les étapes suivantes :
(a) préparation d'une suspension aqueuse contenant une polyamine, un réticulant et un substrat inorganique poreux sous une forme particulaire à une température inférieure ou égale à 10 °C dans un mélangeur pour enduire le substrat inorganique avec la polyamine ;
(b) réticulation de la polyamine dans les pores du substrat inorganique et simultanément élimination de l'eau ;
(c) dissolution du substrat inorganique pour obtenir des particules poreuses biocides d'une polyamine réticulée ; où le substrat inorganique poreux est un matériau qui peut être dissous dans des conditions alcalines aqueuses à un pH > 10.

2. Procédé selon la revendication 1, où les étapes a) et b) sont répétées au moins une fois.

3. Procédé selon l'une des revendications 1 à 2, où la réticulation est effectuée dans un réacteur agité.

4. Procédé selon l'une des revendications 1 à 3, où la polyamine est utilisée à l'état non désalinisé.

5. Procédé selon l'une des revendications 1 à 4, où la polyamine est une polyvinylamine.

6. Particules poreuses biocides d'une polyamine réticulée pouvant être obtenues ou préparées conformément à un procédé selon l'une des revendications 1 à 5.

7. Utilisation de particules poreuses biocides selon la revendication 6 ou préparées conformément à un procédé selon l'une des revendications 1 à 5 pour éliminer des contaminants biologiques d'une eau en amenant l'eau contaminée en contact avec les particules poreuses biocides, par exemple par filtration.

8. Utilisation selon la revendication 7, où les contaminants biologiques sont des bactéries, germes, levures, espèces fongiques ou virus.

9. Cartouche filtrante qui contient des particules poreuses biocides selon la revendication 6 ou préparées ou pouvant être obtenues conformément à un procédé selon l'une des revendications 1 à 5.
